# EUROPEAN PATENT APPLICATION

(11) **EP 2 437 390 A1**
(43) Date of publication of application: **04.04.2012**
(21) Application number: 11183079.0
(22) Date of filing: 28.09.2011
(51) Int. Cl.: H02M 7/5387, H02M 1/32

(54) **Inverter device and electric vehicle incorporating same**

(30) Priority: 29.09.2010 JP 2010219491
(71) Applicant: Sanyo Electric Co., Ltd., Osaka 570-8677 (JP)
(72) Inventor: Okada, Hoshihito, Moriguchi City, Osaka 570-8677 (JP); Maeda, Yoshihiko, Moriguchi City, Osaka 570-8677 (JP); Takao, Hiroshi, Moriguchi City, Osaka 570-8677 (JP); Enomoto, Yoichi, Moriguchi City, Osaka 570-8677 (JP)
(74) Representative: Glawe, Delfs, Moll

(57) **Abstract**

An inverter device of the present invention includes: an inverter circuit portion that has a plurality of switching elements and that converts direct-current power into alternating-current power; and a temperature detection sensor that detects the temperature of the switching elements, in which, in the inverter circuit portion, a plurality of the switching elements on each of an upper side arm and a lower side arm corresponding to each phase are connected in parallel, and the temperature detection sensor is arranged in an intermediate position between the switching elements connected in parallel.

## Description

### BACKGROUND OF THE INVENTION

### 1. Field of the Invention

The present invention relates to an inverter device that is utilized to control a motor. The present invention also relates to an electric vehicle that incorporates such an inverter device.

### 2. Description of Related Art

Conventionally, an inverter circuit is often utilized as a device that controls a motor applied to an electric vehicle or the like. The inverter circuit has the function of converting direct-current power output from a power supply portion into alternating-current power that is needed to drive a motor. The inverter circuit includes a switching element that is formed with a FET (field effect transistor) and the like, and controls the switching element to repeatedly pass and interrupt a current and thereby convert direct-current power into alternating-current power.

When inverter circuits control, for example, three-phase motors, some of the inverter circuits each include a total of six switching elements that correspond to an upper side arm (a high voltage side) and a lower side arm (a low voltage side) of three phases (U phase, V phase and W phase). The inverter circuit controls these switching elements to switch the direction of the three-phase current and supply a desired drive power to the motor.

While the motor is rotated, in the inverter circuit, currents that are passed through the switching elements are switched one after another, and are converted into alternating-current power. It is likely that the current is passed through the switching element itself and thus the temperature is increased, and that, when the temperature exceeds a limit, the switching element is broken. In order to prevent the temperature of the switching element from being increased, the inverter device often includes a temperature detection sensor that detects the temperature of the switching element.

In such an inverter circuit, an open failure can occur in the switching element. Hence, the method of detecting an open failure in the inverter circuit has been examined, and is disclosed as a conventional technology. A motor drive system disclosed as the conventional technology detects, with a current sensor, the varied frequencies of direct currents that are input and output to a direct-current power supply. Then, when the varied frequencies of the direct currents are in synchronism with the rotation speed of the motor driven by the inverter, an open failure in which one switching element included in any one of a plurality of arms is kept off is detected.

Here, in the inverter circuit, in order to rise a current through the motor to increase the output of the motor, it is preferable to select a switching element that generally has a relatively low resistance when it is on. However, such a switching element may have a relatively large size and may be expensive; furthermore, it is likely that there is no switching element that satisfies the performance requirement. Hence, a plurality of switching elements on each of the upper side arm and the lower side arm corresponding to each phase of the inverter circuit may be connected in parallel and used.

Then, when an open failure occurs in part of the switching elements connected in parallel as described above, since the remaining part is electrically connected, it is impossible to detect the open failure with a current sensor. Therefore, in the method of detecting an open failure of the switching element in the conventional motor drive system, it is likely that an open failure of a plurality of switching elements connected in parallel cannot be detected.

### SUMMARY OF THE INVENTION

The present invention is made in view of the foregoing problem. An object of the present invention is to provide an inverter device that can detect an open failure of a switching element even when a plurality of switching elements on each of the upper side arm and the lower side arm corresponding to each phase of an inverter circuit portion are connected in parallel. Another object of the present invention is to provide an electric vehicle whose reliability is enhanced by incorporating such an inverter device.

To overcome the foregoing problem, according to the present invention, there is provided an inverter device including: an inverter circuit portion that includes a plurality of switching elements and that converts direct-current power into alternating-current power; and a temperature detection sensor that detects a temperature of the switching elements, in which, in the inverter circuit portion, a plurality of the switching elements on each of an upper side arm and a lower side arm corresponding to each phase are connected in parallel, and the temperature detection sensor is arranged in an intermediate position between the switching elements connected in parallel.

In the connection between the plurality of the switching elements described above, the phrase "being connected in parallel" means being electrically connected in parallel. In the arrangement of the temperature detection sensors, the term "intermediate" means an intermediate in space. The phrase "intermediate in space" means a position that is affected substantially equally by the heat of the plurality of the switching elements electrically connected in parallel.

The inverter device configured as described above includes; a main wiring board on which the inverter circuit portion and the temperature detection sensor are provided, in which the main wiring board includes an electrically conducting path that connects terminals of the switching elements connected in parallel, and the temperature detection sensor is arranged in a portion of a surface of the main wiring board that corresponds to the electrically conducting path.

The inverter device configured as described above includes; a control portion that controls the inverter circuit portion, in which the control portion controls the inverter circuit portion based on an output of the temperature detection sensor.

The inverter device configured as described above includes; a state output portion that outputs failure information on the inverter circuit portion based on an output of the temperature detection sensor.

In the present invention, an electric vehicle incorporates the inverter device described above.

The electric vehicle configured as described above includes: a notification portion that notifies a user of the failure information output by the state output portion.

### BRIEF DESCRIPTION OF THE DRAWINGS

Fig. 1 is a side view showing an example of an electric vehicle that incorporates an inverter device according to an embodiment of the present invention;
Fig. 2 is a block diagram showing the configuration of the electric vehicle of Fig. 1;
Fig. 3 is a schematic configuration diagram showing the vicinity of the inverter device of Fig. 2;
Fig. 4 is a perspective view showing the vicinity of a main wiring board of the inverter device of Fig. 3;
Fig. 5 is a partially enlarged plan view of the main wiring board shown in Fig. 4;
Fig. 6 is a flowchart showing an operation of determining a failure of a switching element by the inverter device; and
Fig. 7 is a graph showing changes in the temperature of the switching element in a normal state and in a failure state.

### DETAILED DESCRIPTION OF PREFERRED EMBODIMENTS

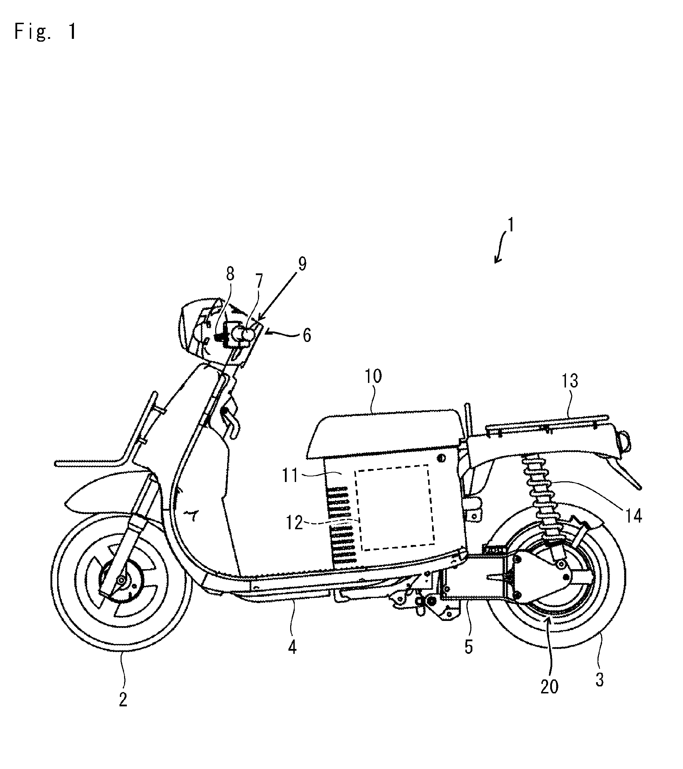

An embodiment of the present invention will be described below with reference to Figs. 1 to 7.

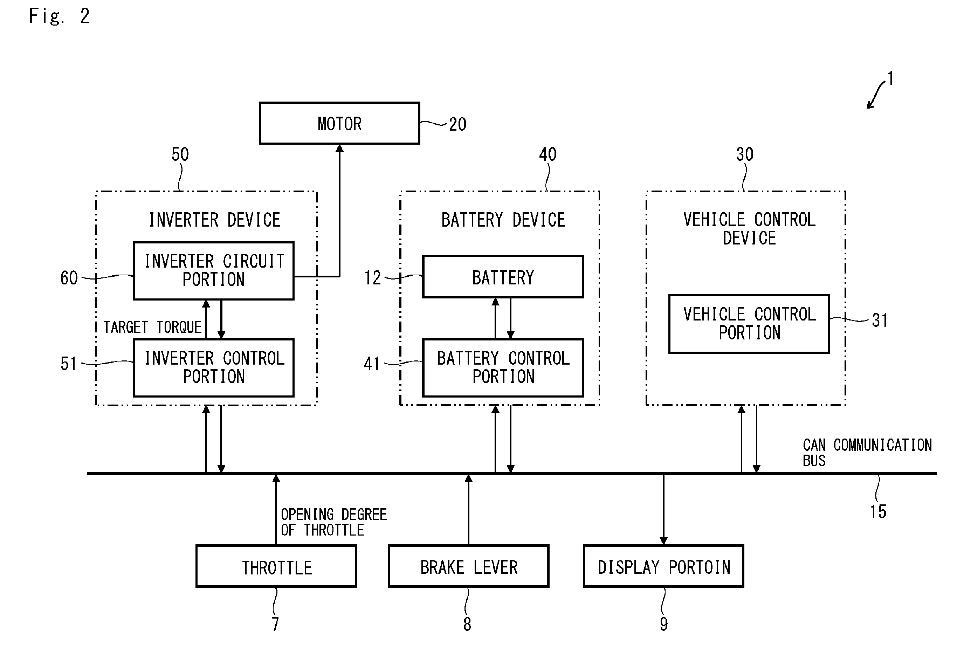

The structure of an electric vehicle incorporating an inverter device according to the embodiment of the present invention will first be described with reference to Figs. 1 and 2. Fig. 1 is a side view showing an example of the electric vehicle incorporating the inverter device; Fig. 2 is a block diagram showing the configuration of the electric vehicle.

The electric vehicle 1 is an electrically operated two-wheel vehicle that has a front wheel 2 and a rear wheel 3 as shown in Fig. 1; specifically, the electric vehicle 1 is an electrically operated automatic two-wheel vehicle. The electric vehicle 1 has a main frame 4 and a swinging arm 5 as a main skeleton framework.

The front end portion of the main frame 4 is bent upward, and the front end portion supports the front wheel 2 and handlebars 6 such that the front wheel 2 and the handlebars 6 can be steered. The handlebars 6 are provided with: a throttle 7 that is used when the electric vehicle 1 is accelerated or decelerated; and a brake lever 8 that is used for breaking. In the middle of the left and right handlebars 6, a display portion 9 is provided. The display portion 9 displays drive information such as the on/off state of a power supply and a driving speed, and also functions as a notification portion that provides a notification of failure information to a user through an error code or the like when a failure occurs in the electric vehicle 1.

On the rear end side of the main frame 4, that is, substantially in the middle portion in the front-back direction of the electric vehicle 1, a seat 10 on which the user sits and a battery holding portion 11 are provided. The battery holding portion 11 is provided below the seat 10, and can hold a battery 12 therewithin. The seat 10 also functions as the lid of the battery holding portion 11, and is attached to the battery holding portion 11 such that the lid can be opened and closed. Behind the seat 10 of the main frame 4, that is, above the rear wheel 3, an item rack 13 is provided.

The swinging arm 5 extends rearward from the lower portion of the seat 10 and the battery holding portion 11 on the rear portion of the main frame 4. The rear wheel 3 is supported by the rear end of the swinging arm 5. The rear wheel 3 is a driven wheel; a motor 20 for driving the rear wheel 3 is provided between the rear wheel 3 and the swinging arm 5. In other words, the swinging arm 5 supports the rotation shafts of the motor 20 and the rear wheel 3 such that they are arranged horizontally. A suspension unit 14 that suspends the motor 20 and the rear wheel 3 is provided to extend from the upper portion of the motor 20 of the swinging arm 5 to the item rack 13 arranged above.

In order to control the operation of the entire vehicle, as shown in Fig. 2, the electric vehicle 1 internally includes a vehicle control device 30, a battery device 40 and an inverter device 50. The vehicle control device 30 includes a vehicle control portion 31 that controls the entire electric vehicle 1. The battery device 40 includes a battery 12 and a battery control portion 41 that control the battery 12. The inverter device 50 includes an inverter circuit portion 60 and an inverter control portion 51 that controls the inverter circuit portion 60. The vehicle control portion 31, the battery control portion 41 and the inverter control portion 51 are formed with general microcomputers; based on programs and data stored and input in the microcomputers, they function as processors to control a series of operations that is performed by them and that is related to the driving of the electric vehicle 1.

For communication between the constituent elements described above, a single communication bus 15 is provided in the electric vehicle 1. Through the communication bus 15, the vehicle control portion 31, the battery control portion 41, the inverter control portion 51, the throttle 7, the display portion 9 and the like perform CAN communication with each other.

In the inverter device 50, when the electric vehicle 1 is driven, the inverter control portion 51 sets a target torque of the motor 20 corresponding to the opening degree of the throttle 7 obtained from the throttle 7 operated by the user. Then, the inverter control portion 51 adjusts, according to power supplied from the battery 12, a current and a voltage that need to be fed to the motor 20 by controlling the inverter circuit portion 60, and drives the motor 20.

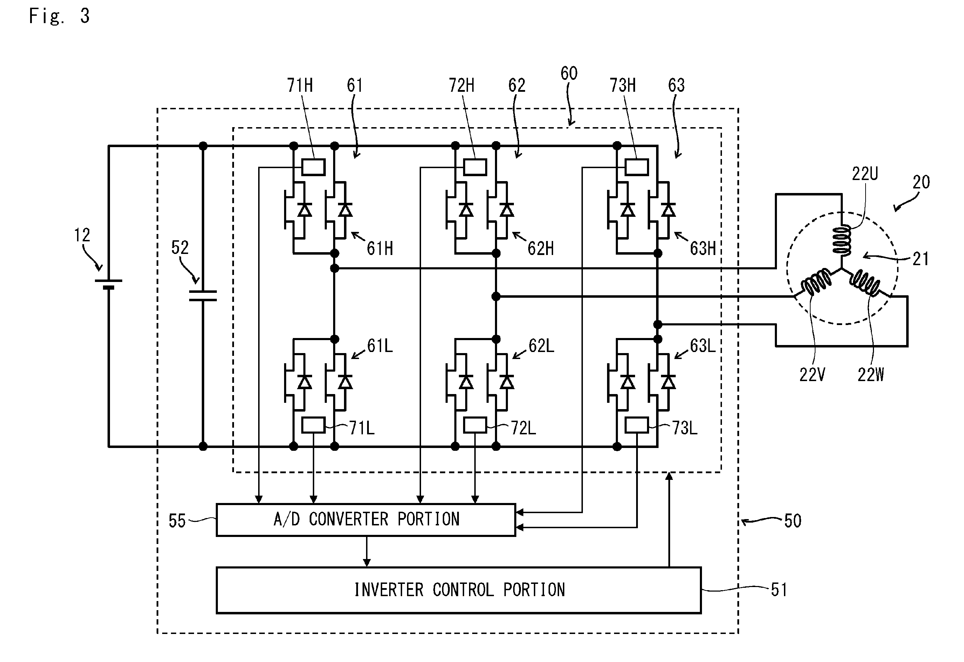

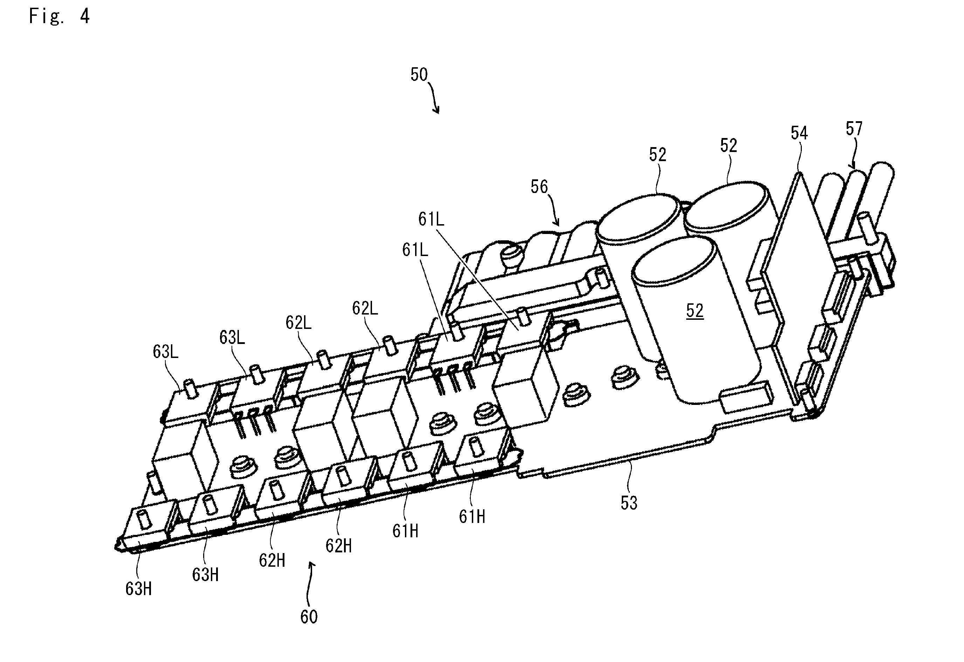

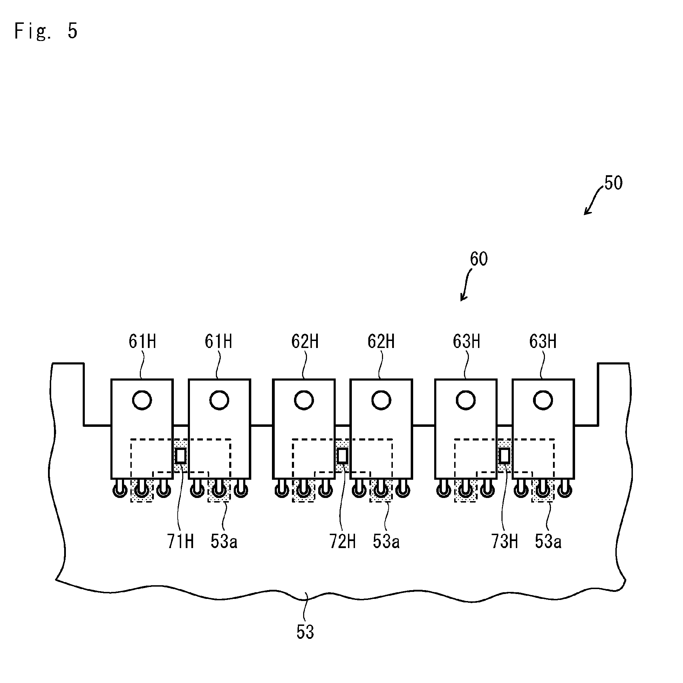

The detailed configuration of the motor 20 and the inverter device 50 will now be described with reference to Figs. 1 and 2 as well as Figs. 3 to 5. Fig. 3 is a schematic configuration diagram showing the vicinity of the inverter device 50; Fig. 4 is a perspective view showing the vicinity of a main wiring board of the inverter device 50; Fig. 5 is a partially enlarged plan view of the main wiring board. In the following description, unless it is necessary to particularly place limitation, identification symbols "U", "V" and "W" that represent the phases of the motor 20 and identification symbols "H" and "L" that represent whether the power is high or low may be omitted.

The motor 20 is a three-phase brushless motor, and includes a rotor (unillustrated) and a stator 21 (see Fig. 3). A permanent magnet is provided in the rotor; coils 22U, 22V and 22W of U phase, V phase and W phase are provided in the stator 21.

Here, the battery 12 is a direct-current power supply; a positive output terminal is on a high voltage side and a negative output terminal is on a low voltage side; a direct-current voltage is output between the positive output terminal and the negative output terminal.

The inverter device 50 includes the inverter circuit portion 60 configured as shown in Fig. 3 and a capacitor 52. The capacitor 52 functions to smooth out variations in the direct-current power output from the battery 12. As shown in Fig. 4, the inverter device 50 includes the main wiring board 53 in which the inverter circuit portion 60 and the capacitor 52 are unevenly provided and a control board 54 in which the inverter control portion 51 is provided and which is arranged to stand on the surface of the main wiring board 53.

As shown in Fig. 3, the inverter circuit portion 60 includes a U-phase switching circuit 61, a V-phase switching circuit 62 and a W-phase switching circuit 63. In each of the switching circuits, a switching element on a high voltage side and a switching element on a low voltage side are connected as a pair in series, and are connected between the high voltage side and the low voltage side of the battery 12.

The U-phase switching circuit 61 is formed with an upper side arm (high voltage side) switching element 61H and a lower side arm (low voltage side) switching element 61L. The V-phase switching circuit 62 is formed with an upper side arm (high voltage side) switching element 62H and a lower side arm (low voltage side) switching element 62L. The W-phase switching circuit 63 is formed with an upper side arm (high voltage side) switching element 63H and a lower side arm (low voltage side) switching element 63L. As these switching elements, for example, FETs (field effect transistor) and IGBTs (insulated gate bipolar transistor) can be utilized. Although, in the switching element shown in Fig. 3, a so-called parasitic diode that is parasitically included due to its structure is illustrated, such a diode is not provided as a separate member.

In the switching elements on each of the upper side arm and the lower side arm corresponding to each of the U phase, the V phase and the W phase, as shown in Figs. 3 and 5, two switching elements are electrically connected in parallel. The terminals of the two switching elements connected in parallel are connected by an electrically conducting path 53a provided in the main wiring board 53 (see Fig. 5).

It is unnecessary to arrange the two switching elements electrically connected in parallel such that they are spatially placed side by side as shown in Figs. 4 and 5. The two switching elements electrically connected in parallel may be arranged side by side vertically or obliquely in Fig. 5 or may be arranged separately on the front and the back of the main wiring board 53. Although, in Fig. 5, only the electrically conducting path 53a connecting the center terminals of each of the switching elements is typically shown, the unillustrated other terminals are assumed to be likewise connected.

The junction between the upper side arm switching element 61H and the lower side arm switching element 61L of the U phase that are connected in series is connected to the coil 22U of the motor 20. The junction between the upper side arm switching element 62H and the lower side arm switching element 62L of the V phase that are connected in series is connected to the coil 22V of the motor 20. The junction between the upper side arm switching element 63H and the lower side arm switching element 63L of the W phase that are connected in series is connected to the coil 22W of the motor 20.

Then, the inverter control portion 51 controls the switching operation of each of the switching elements, and the inverter circuit portion 60 repeatedly passes and interrupts the current through each of the switching elements and thereby converts direct-current power into alternating-current power. The alternating-current power is supplied to the motor 20, and thus current is passed through the coils 22U, 22V and 22W of the U phase, the V phase and the W phase of the motor 20, with the result that the motor 20 is driven.

When the inverter circuit portion 60 converts direct-current power into alternating-current power, the inverter control portion 51 changes the voltage levels of the U phase, the V phase and the W phase as time goes by. Either the motor 20 or the inverter device 50 is provided with means for detecting a position in the direction of rotation of the rotor of the motor 20, and, based on the position and the desired output torque of the motor 20, the inverter control portion 51 selects the switching element through which current is passed.

As shown in Figs. 3 and 5, the inverter device 50 is provided with temperature detection sensors 71 to 73. The temperature detection sensors 71H, 72H and 73H correspond to the upper side arm switching elements 61H, 62H and 63H of the U phase, the V phase and the W phase, and the temperature detection sensors 71L, 72L and 73L correspond to the lower side arm switching elements 61L, 62L and 63L of the U phase, the V phase and the W phase, with the result that the temperatures of the switching elements are detected.

As shown in Fig. 5, each of the temperature detection sensors is arranged in the intermediate position between the two corresponding switching elements connected in parallel. For example, the temperature detection sensor 71H is arranged in the intermediate position between the two corresponding upper side arm switching elements 61H of the U phase connected in parallel.

Here, when an open failure occurs in one of the switching elements connected in parallel, a large amount of current is passed through the other switching element that undergoes no open failure as compared with the case where both switching elements are normal, with the result that it is likely that the amount of heat generated by the switching element is theoretically four times as great as the normal case. Since, in the configuration described above, the temperature detection sensor is arranged in the intermediate position between the switching elements connected in parallel, an abnormal temperature rise caused by heat generation resulting from the open failure of the switching element can be detected.

Each of the temperature detection sensors is arranged on a portion of the surface of the main wiring board 53 that corresponds to the electrically conducting path 53a provided between the terminals of the two switching elements connected in parallel. Thus, it is possible to further easily detect the abnormal temperature rise caused by heat generation resulting from the open failure of the switching element.

In conditions of position of the temperature detection sensors, the term "intermediate" refers to a spatial position that is affected substantially equally by the heat of the two switching elements electrically connected in parallel, and the term "intermediate" does not necessarily refer to the exact center between the two switching elements. The temperature detection sensor is preferably arranged between the two switching elements; the position where the temperature detection sensor is arranged is not limited to a position that is exactly equidistant therefrom. The electrically conducting path 53a can be formed on the surface opposite to the surface of the main wiring board 53 where the temperature detection sensor is arranged or can be formed within the main wiring board 53 composed of stacked layers.

The temperature detection sensors 71H to 73H and 71L to 73L are formed with, for example, thermistors, and detect the temperatures of the corresponding switching elements. An output from each of the temperature detection sensors is converted from an analog signal to a digital signal by an A/D converter portion 55, and is fed to the inverter control portion 51.

As shown in Fig. 4, the inverter device 50 includes a terminal portion 56 for a power line and a signal line 57. The other constituent elements such as the motor 20, the vehicle control device 30 and the battery device 40 are connected through the terminal portion 56 and the signal line 57 to the inverter device 50. For example, when a failure occurs in the inverter device 50, the inverter control portion 51 utilizes the signal line 57 as a state output portion that outputs its failure information, and displays failure information such as an error code on the display portion 9, which is the notification portion to the user.

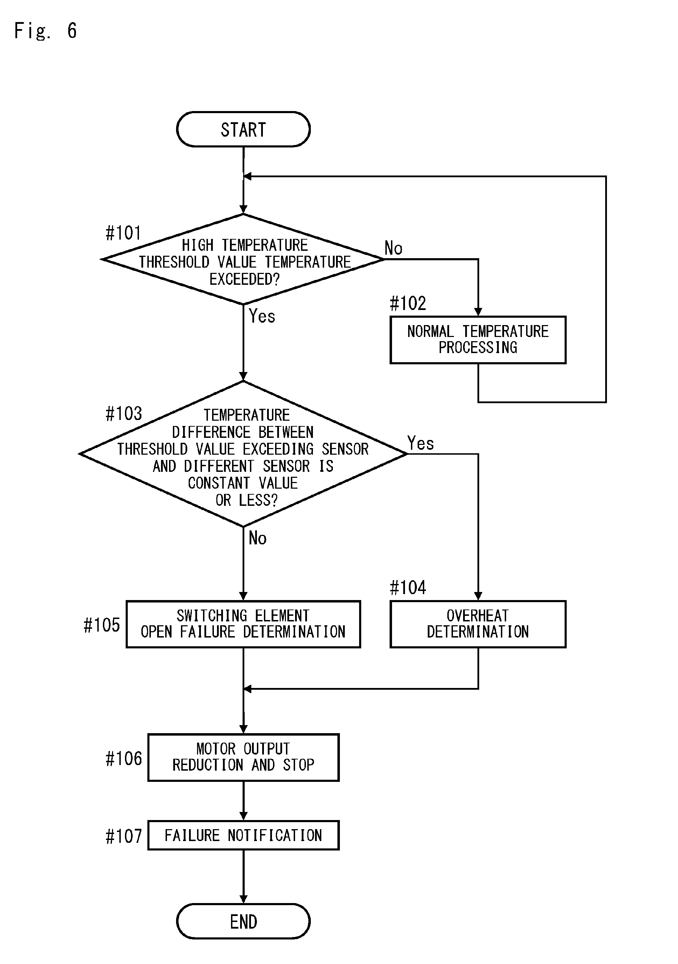

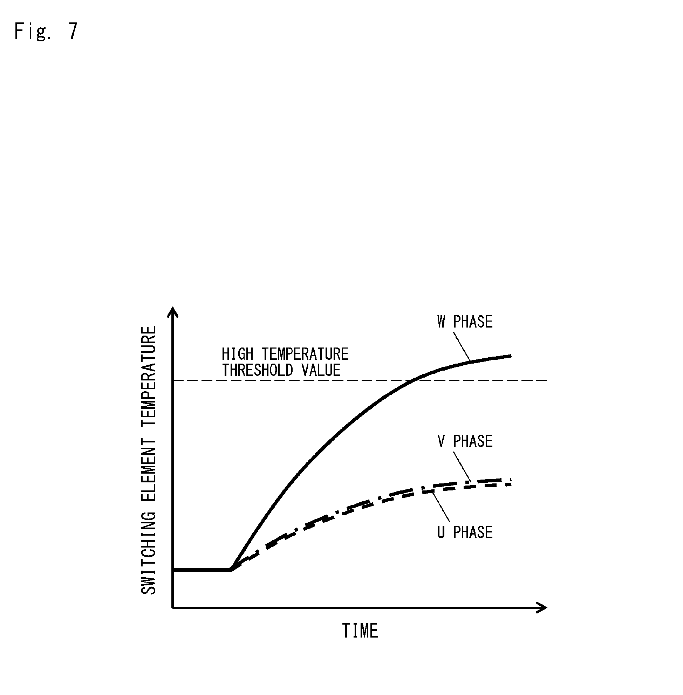

An operation of determining the failure of the switching element by the inverter device 50 will now be described along a flow shown in Fig. 6 with reference to Fig. 7. Fig. 6 is a flowchart showing the operation of determining the failure of the switching element by the inverter device; Fig. 7 is a graph showing temperature changes in a normal state and in a failure state.

With the electric vehicle 1 in a power-on state (the start of Fig. 6), the inverter control portion 51 of the inverter device 50 determines, based on the output from the temperature detection sensors 71 to 73, whether or not the temperature of the switching elements exceeds a high temperature threshold value (step #101 of Fig. 6). This processing is performed to identify whether or not any one of the switching elements reach an abnormal temperature; the high temperature threshold value is previously set at a temperature of 110°C when a motor having, for example, a rated voltage of 50 volts is driven. The threshold value is previously stored in an internal memory or the like of the microcomputer in the inverter control portion 51, and can be changed as necessary.

If, in step #101, the temperature of the switching element does not exceed the high temperature threshold value that is a temperature of 110°C (no in step #101), the inverter control portion 51 performs normal temperature processing (step #102), that is, controls the inverter circuit portion 60 in a normal way.

On the other hand, if, in step #101, the temperature of the switching element exceeds the high temperature threshold value that is a temperature of 110°C (yes in step #101), the inverter control portion 51 determines whether or not a temperature difference between a temperature that is output by the temperature detection sensor in which the threshold value is exceeded and a temperature that is output by each of the other temperature detection sensors different therefrom is a predetermined value or less (step #103). This processing is performed to identify whether or not the switching elements of the inverter circuit portion 60 are increased in temperature at the same time; the predetermined value of the temperature difference is previously set at, for example, 10°C. The predetermined value is previously stored in the internal memory or the like of the microcomputer in the inverter control portion 51, and can be changed as necessary.

If, in step #103, the temperature difference between the temperature that is output by the temperature detection sensor in which the threshold value is exceeded and the temperature that is output by each of the other temperature detection sensors different therefrom is the predetermined value or less, that is, in addition to the switching element in which 110°C is exceeded, a switching element is present in which the temperature difference with its switching element is 10°C or less (yes in step #103), the inverter control portion 51 determines that the inverter circuit portion 60 is in an overheat state (step #104).

On the other hand, if, in step #103, the temperature difference between the temperature that is output by the temperature detection sensor in which the threshold value is exceeded and the temperature that is output by each of the other temperature detection sensors different therefrom is not the predetermined value or less, that is, except for the switching element in which 110°C is exceeded, a switching element is not present in which the temperature difference with its switching element is 10°C or less (no in step #103), the inverter control portion 51 determines that an open failure occurs in the switching element in which the high temperature threshold value of 110°C is exceeded (step #105).

Fig. 7 is a diagram showing that this switching element is in the state where the open failure occurs. Fig. 7 shows, from the tendency of the temperatures of the U phase and the V phase, that the switching elements of the U phase and the V phase are in the normal state; Fig. 7 also shows, from the tendency of the temperature of the W phase, that the switching element of the W phase is in a failure state, that is, in the open failure.

If, in step #104, the inverter circuit portion 60 is determined to be in the overheat state, and, in step #105, an open failure is determined to occur in the switching element, the inverter control portion 51 controls the inverter circuit portion 60 to decrease the output of the motor 20 and stop the motor 20 (step #106). Then, the inverter control portion 51 utilizes the signal line 57 as its state output portion to output failure information on the inverter circuit portion 60 based on the output of the temperature detection sensor, and thereby notifies the other constituent elements of the failure (step #107). For example, the inverter control portion 51 displays failure information such as an error code on the display portion 9, which is the notification portion to the user. Then, the operation flow for determining the failure of the switching element by the inverter device 50 is completed (the end of Fig. 6).

Since, as described above, the inverter control portion 51 controls the inverter circuit portion 60 based on the output of the temperature detection sensor, the inverter device 50 performs an operation corresponding to the state of the switching element. Since, for example, when an open failure occurs in one of the switching elements connected in parallel, it is highly likely that a large amount of current is passed through the other switching element that undergoes no failure as compared with the case where both switching elements are normal, the inverter device 50 can cope with the problem such that the normal switching element is prevented from reaching a high temperature and being damaged.

Since the inverter device 50 includes the signal line 57 as the state output portion that outputs failure information on the inverter circuit portion 60 based on the output of the temperature detection sensor, the inverter device 50 utilizes the signal line 57 and can output, to the outside, the failure information on the open failure of the switching element of the inverter circuit portion 60. Thus, the inverter device 50 can notify the failure information to the user or can control the other constituent elements based on the failure information.

Furthermore, since the electric vehicle 1 includes the display portion 9 as the notification portion that provides, to the user, a notification of failure information that is output by utilization of the signal line 57 by the inverter device 50, it is possible to notify the user of the open failure of the switching element of the inverter circuit portion 60. Therefore, the user can easily grasp the failure of the electric vehicle 1, and can quickly cope with the failure by making a repair or the like.

Since, in the embodiment described above, the temperature detection sensors 71 to 73 are arranged in the intermediate position between the switching elements connected in parallel, the temperature detection sensors 71 to 73 detect an abnormal temperature rise caused by heat resulting from the open failure of the switching element. Hence, even when the two switching elements on each of the upper side arm and the lower side arm corresponding to each phase of the inverter circuit portion 60 are connected in parallel, it is possible to provide the inverter device 50 that can detect the open failure of the switching element. By incorporating such an inverter device 50, it is possible to provide the electric vehicle 1 whose reliability is enhanced.

Although the embodiment of the present invention has been described above, the scope of the present invention is not limited to such an embodiment, and many modifications are possible without departing from the spirit of the present invention.

For example, although, in the embodiment of the present invention, the electric vehicle 1 incorporating the inverter device 50 has been described using the automatic two-wheel vehicle shown in Fig. 1 as an example thereof, the electric vehicle in which the inverter device 50 is incorporated is not limited to an automatic two-wheel vehicle, and may be an automatic three-wheel vehicle or an automatic four-wheel vehicle.

## Claims

1. An inverter device comprising:
an inverter circuit portion that includes a plurality of switching elements and that converts direct-current power into alternating-current power; and
a temperature detection sensor that detects a temperature of the switching elements,
wherein, in the inverter circuit portion, a plurality of the switching elements on each of an upper side arm and a lower side arm corresponding to each phase are connected in parallel, and
the temperature detection sensor is arranged in an intermediate position between the switching elements connected in parallel.

2. The inverter device of claim 1, further comprising:
a main wiring board on which the inverter circuit portion and the temperature detection sensor are provided,
wherein the main wiring board includes an electrically conducting path that connects terminals of the switching elements connected in parallel, and
the temperature detection sensor is arranged in a portion of a surface of the main wiring board that corresponds to the electrically conducting path.

3. The inverter device of claim 1 or claim 2, further comprising:
a control portion that controls the inverter circuit portion,
wherein the control portion controls the inverter circuit portion based on an output of the temperature detection sensor.

4. The inverter device of any one of claims 1 to 3, further comprising:
a state output portion that outputs failure information on the inverter circuit portion based on an output of the temperature detection sensor.

5. An electric vehicle incorporating the inverter device of any one of claims 1 to 4.

6. The electric vehicle of claim 5 comprising;
a state output portion that outputs failure information on the inverter circuit portion based on an output of the temperature detection sensor; and
a notification portion that notifies a user of the failure information output by the state output portion.
